# EUROPÄISCHE PATENTANMELDUNG

(11) **EP 4 335 305 A2**
(43) Veröffentlichungstag der Anmeldung: **13.03.2024**
(21) Anmeldenummer: 23189769.5
(22) Anmeldetag: 04.08.2023
(51) Int. Cl.: A23N 7/04

(54) **SCHÄLVORRICHTUNG UND SCHÄLVERFAHREN FÜR STANGENFÖRMIGES GEMÜSE**

(30) Priorität: 07.09.2022 DE 102022122742
(71) Anmelder: Hepro GmbH, 33378 Rheda-Wiedenbrück (DE)
(72) Erfinder: Protte, Christoph, 33129 Delbrück (DE)
(74) Vertreter: DTS Patent- und Rechtsanwälte Schnekenbühl und Partner mbB

(57) **Zusammenfassung**

Die vorliegende Erfindung betrifft eine Schälvorrichtung (100) zum Schälen von stangenförmigen Gemüse (102), insbesondere von grünem und weißen Spargel, mit einer Längsachse (A), umfassend eine Behandlungsachse (AA), eine Greifereinheit (104) mit mindestens einem Greiferelement (106) zum angetriebenen Halten eines Gemüses, eine entlang der Behandlungsachse (AA) mittels eine Antriebs (122) motorisch verfahrbare Schäleinheit (108), eine Steuereinheit (500) zum Steuern und Regeln der Schälvorrichtung, wobei die Greifereinheit ausgebildet ist, das Gemüse ortsfest zu halten, und wobei das mindestens eine Greiferelement derart gelagert und motorisch antreibbar ist, dass das Gemüse um die Längsachse (A) rotierbar ist, wobei die Schäleinheit mindestens ein in Richtung der Behandlungsachse (AA) schwenkbar gelagertes Messer (110) aufweist, und wobei im bestimmungsgemäßen Betrieb der Schälvorrichtung die Behandlungsachse (AA) und die Längsachse (A) eines Gemüses deckungsgleich oder weitgehend deckungsgleich ausgerichtet sind, und wobei eine Sensoreinheit (300) zum Erfassen von Messwerten umfasst ist, welche mindestens einen Geometriesensor (302) und/oder mindestens einen Farbsensor (304) aufweist, und wobei die Steuereinheit ausgebildet ist, auf Basis des mindestens einen Messwertes mindestens einen Schälparameter anzupassen. Weiterhin ist von der Erfindung ein zugehöriges Schälverfahren umfasst.

## Beschreibung

Die vorliegende Erfindung betrifft eine Schälvorrichtung nach dem Oberbegriff des Anspruchs 1, eine weitere Schälvorrichtung nach dem Oberbegriff des Anspruchs 11, ein Schälverfahren nach dem Oberbegriff des Anspruchs 13 und ein weiteres Schälverfahren nach dem Oberbegriff des Anspruchs 17.

Halb- oder vollautomatische Schälmaschinen für Stangengemüse, wie beispielsweise Spargel sind im Stand der Technik bekannt. So offenbart die DE 92 03 558 U eine Schälmaschine für Spargel mit einem Greifer, der zur Halterung einer Spargelstange am Kopf und zur Aufnahme von in Längsrichtung der Spargelstange beim Schälen wirkenden Beanspruchungen ausgebildet ist. Hierbei sind die Schälmessern, die mit vorwiegend in einer längs zur Spargelstange gerichteten Schälrichtung bewegbar sind, unter einer definierten Kraft gegen die Spargelstange angedrückt. Der Greifer ist hierbei oberseitig zu einem sich im Wesentlichen senkrecht erstreckenden Schälbereich angeordnet, in dem eine vom Greifer gehalten Spargelstange von zumindest zwei einander gegenüberliegenden Seiten zugänglich gehalten wird, so dass die Schälmesser paarweise mit gegeneinander gerichtetem Andruck zueinander bewegbar an diesem entlanggeführt werden können. Eine vergleichbare Schälmaschine ist aus der DE 11 2016 002 774 B4 bekannt, wobei hierin ebenfalls mittels paarweiser Messer eine Schälung erfolgt und vorgeschlagen wird, den Spargel in einer vertikalen oder in einer horizontalen, waagrechten Ausrichtung zu schälen.

Nachteilig an diesen grundsätzlich geeigneten Schälmaschinen ist, dass sie aufwändig in der Bedienung und schwierig zu reinigen sind.

Es ist die Aufgabe der vorliegenden Erfindung eine verbesserte Schälmaschine und ein zugehöriges Verfahren vorzuschlagen, dass eine verbesserte Bedienbarkeit vorsieht und leichter zu reinigen ist.

Diese Aufgabe wird erfindungsgemäß gelöst durch eine erste Schälvorrichtung nach den Merkmalen des Anspruchs 1 und eine zweite Schälmaschine nach den Merkmalen des Anspruchs 11, sowie ein erstes Schälverfahren nach den Merkmalen des Anspruchs 13 und ein zweites Schälverfahren nach den Merkmalen des Anspruchs 17 gelöst. Vorteilhafte Ausgestaltungen sind in den jeweiligen, zugehörigen Unteransprüchen angegeben.

Danach wird die Aufgabe gelöst durch eine erste Schälvorrichtung zum Schälen von stangenförmigen Gemüse, insbesondere von grünem und weißen Spargel, mit einer Längsachse (A), wobei die Schälvorrichtung folgendes umfasst:
- eine Behandlungsachse (AA),
- eine Greifereinheit mit mindestens einem Greiferelement zum angetriebenen Halten eines Gemüses,
- eine entlang der Behandlungsachse (AA) mittels eines Antriebs motorisch verfahrbare Schäleinheit,
- eine Steuereinheit zum Steuern und Regeln der Schälvorrichtung, wobei
   die Greifereinheit ausgebildet ist, das Gemüse ortsfest zu halten, und wobei das mindestens eine Greiferelement derart gelagert und motorisch antreibbar ist, dass das Gemüse um die Längsachse (A) rotierbar ist, wobei
   die Schäleinheit mindestens ein in Richtung der Behandlungsachse (AA) schwenkbar gelagertes Messer aufweist, wobei
   im bestimmungsgemäßen Betrieb der Schälvorrichtung die Behandlungsachse (AA) und die Längsachse (A) eines Gemüses deckungsgleich oder weitgehend deckungsgleich ausgerichtet sind. Hierbei ist eine Sensoreinheit zum Erfassen von Messwerten umfasst, welche mindestens Folgendes aufweist:
- mindestens einen Geometriesensor und/oder
- mindestens einen Farbsensor, und wobei die Steuereinheit ausgebildet ist, auf Basis des mindestens einen Messwertes mindestens einen Schälparameter anzupassen.

Ein Geometriesensor meint eine Erfassungsvorrichtung, um mindestens eine geometrische Größe des Gemüses zu erfassen, wie insbesondere den Durchmesser, den Durchmesserverlauf oder die Länge oder Teilabschnitte. Ein Geometriesensor kann auch als eine Geometriesensoreinheit im Zusammenwirken mit einem weiteren Sensor funktionieren, wie beispielsweise einem Wegsensor oder einem Inkrementalgeber eines Motors, die gemeinsam eine geometrische Größe des Gemüses erfassen können.

Weiterhin wird vorliegend eine Längsachse A des Gemüses beschrieben, um die relative Lage und Ausrichtung des Gemüses in der Schälvorrichtung und/oder bei dem Betrieb der Schälvorrichtung zu beschreiben. Es versteht sich, dass ein Naturprodukt, wie ein Spargel nicht eine Längsachse im mathematischen Sinne aufweist, vielmehr Krümmungen und Asymmetrien hat. Somit dient diese Bezeichnung insbesondere zum leichteren Verständnis und zur Veranschaulichung.

Die bezeichneten Messer und/oder deren Lagerung, um sie vorteilhaft an dem Gemüse anzulegen, sind vorliegend nicht näher beschrieben, weil diese Lösungen im Stand der Technik bekannt sind. Die Messer, insbesondere paarweise, sich gegenüberliegende Messer, können eine oder mehrere Klingen aufweisen. Weiterhin können die Messer gerade oder sichelförmig gewölbt ausgeführt sein, so dass die Sichelform der Kontur des Gemüses folgt.

Insbesondere können die Messer hinsichtlich der eigenen Längsachse, die parallel zur der mindestens einen Klinge verläuft, drehbar gelagert sein, so dass diese flach anliegen und Unebenheiten in Richtung der Längsachse ausgleichen können.

Bei einer verbesserten Ausführungsform der Schälvorrichtung kann vorgesehen sein, dass der Schälparameter mindestens einer der folgenden Parameter ist:
- Anzahl der Schälschnitte in Umfangsrichtung, insbesondere der parallelen Schälschnitte,
- Schällänge mindestens eines Schälschnittes entlang der Behandlungsachse (AA) und/oder Längsachse (A),
- Anfangsposition und/oder Endposition mindestens eines Schälschnittes,
- Anpresskraft des mindestens einen schwenkbar gelagerten Messers auf mindestens einer Teillänge der Schällänge,
- Haltebereich des Greiferelementes entlang der Längsachse (A) des Gemüses beim Halten,
- Haltekraft des Greiferelementes mindestens für eine Teildauer des Haltens des Gemüses.

Hierbei meint ein "Schälschnitt" ein Abgleiten des Messers entlang des Gemüses in Anlage von einer Anfangsposition bis zu einer Endposition, wobei die Endposition insbesondere durch das freie Ende, beispielsweise des Fußendes des Gemüses, definiert wird. Beim Erreichen oder Überfahren der Endposition wird nach einem Schälschnitt das Messer von dem Gemüse abgehoben und/oder von quer zur Längsachse weiter entfernt, um kontaktlos zur Anfangsposition verfahren werden zu können. In analoger Weise meint die "Schällänge" die Anlagestrecke des Messers an dem Gemüse beim Schälschnitt.

Werden zwei oder mehr Gemüse(-stangen) mit mechanisch gekoppelten Greiferelementen und/oder Messern behandelt, können die Parameter gemittelte Werte sein oder den Wert eines Gemüses darstellen, das insgesamt zu einer optimalen Schälung führt. Bei dem Durchmesser von zwei Gemüse(-stangen) ist es vorteilhaft, die Anzahl der Schälschnitte vom Durchmesser oder Umfang des dickeren Gemüses abzuleiten, um insgesamt eine vollständige Schälung zu gewährleisten.

Vorteilhafterweise können Schälparameter auch in Abhängigkeit der Betriebszeit und damit der Summe aller bisherigen Schälschritte eingestellt werden. Somit kann es vorteilhaft sein, die Anpresskraft über die Dauer der Betriebszeit zu erhöhen, damit stets eine ausreichende Schnitt- oder Schältiefe erreicht wird. Weiterhin kann es vorteilhaft sein, den Anpressdruck (Schäldruck) beispielsweise bei sehr dünnen Gemüsestangen zu verringern, um so die Schältiefe zu regeln. In analoger Weise kann es vorteilhaft sein den Anpressdruck zu verringern, wenn beispielsweis für den letzten Schälschritt nur noch ein kleiner Steg der restlichen Schale steht, also geringe Auflagefläche eines Messers (Teilschnitt) vorliegt. Bei einem Vollschnitt, wenn das Messer mit der gesamten Auflagebreite auf der Schale aufliegt, kann einen etwas höhere Kraft vorgesehen werden.

Bei einer weiter verbesserten Ausführungsform der Schälvorrichtung kann ein Vorteil darin bestehen, wenn ein in Richtung der Behandlungsachse verfahrbares Stützelement vorgesehen ist, welches quer zur Behandlungsachse ausgerichtet ist und/oder ausgerichtet werden kann, insbesondere ein verfahrbares Stützelement, welches schwenkbar gelagert ist.

Gemäß dieser Ausführungsform kann mittels des Stützelementes am Ende der Schälung, in einer definierten und von der Länge des Gemüses abhängigen Position unterhalb der Gemüsestange, das Stützelement ausgeklappt werden und die Gemüsestange nach oben durch das Greiferelement hindurch aus der Schälmaschine geschoben werden. Dort kann das Gemüse manuell entnommen werden oder durch eine geeignete Transport- und/oder Transfereinheit erfasst und/oder abtransportiert werden.

Eine weitere Verbesserung kann darin bestehen, wenn das Stützelement ein Greiferelement ist oder auch als ein solches ausgebildet ist. Hierbei ist es insbesondere vorteilhaft, wenn ein solches Stütz- und Greiferelement schwenkbar gelagert angeordnet ist, so dass ein geschältes Gemüse gesteuert abgelegt und im Bereich der Auf diese Weise kann ein geschältes Gemüse in dem Schälraum geschwenkt und über eine Ausleitvorrichtung abtransportiert oder entnommen werden kann.

Dieses Stützelement dient dazu, das eine Ende, insbesondere das Fußende des Gemüses, hierauf aufstehen kann und weiterhin zentriert werden kann. Es kann ein Vorteil darin bestehen, wenn das Stützelement Teil der Schäleinheit ist und mit bzw. durch dies in vertikaler Richtung verfahrbar ist. Hierbei ist die Schwenkachse an der Schäleinheit gelagert. Bei einer Alternative weist das Stützelement einen eigenen Antrieb und eine entsprechende Lagerung oder Führung auf. Die Führung kann hierbei beispielsweise derart geführt sein, dass das Stützelement seitlich weggefahren werden kann und/oder weggeschwenkt werden kann, damit dieses bei der Schälung nicht von herabfallenden Schalen überdeckt und verunreinigt wird.

Der Aufnahmebereich für das Gemüse des Stützelementes ist vorteilhafterweise als (Zentrier-)Konus und/oder Teller ausgebildet, die leicht abgeschwämmt werden können.

Bei einer weiter verbesserten Ausführungsform der Schälvorrichtung kann ein Vorteil darin bestehen, wenn das mindestens eine Greiferelement ein fluidisch öffnender und schließender Greifer ist, welcher insbesondere eine Ring- oder Kranzform aufweist, wobei das Gemüse beim Ein- oder Ausführen in das Greiferelement in Richtung der Längsachse (A) hindurchgeführt werden kann, insbesondere vollständig hindurchgeführt werden kann.

Fluidisch meint hierbei, dass mittels Gas, insbesondere (Druck-)Luft oder einer Flüssigkeit, insbesondere Wasser, mindestens ein Greiferkissen ausgedehnt wird, und durch die Querschnittsverengung ein darin angeordnetes Gemüse im Umfang eingeklemmt und gehalten wird. Dabei ist Ring- oder Kranzform nicht einschränkend zu verstehen. Die Ring- oder Kranzform kann auch aus einzelnen Greiferkissen gebildet werden, beispielsweise aus zwei, drei oder mehr einzelnen Greiferkissen, die beispielsweise nach innen gerichtet auf dem Umfang einer Tragstruktur angeordnet ist. Der "Umfang" kann auch aus einer Mehrzahl von kreissegment-, steg- oder fingerartigen Tragelementen gebildet werden, die jeweils mindestens ein Greiferkissen aufweisen und fluidisch beaufschlagt werden können.

Mit "vollständig hindurchgeführt" ist vorliegend gemeint, dass ein Gemüse mit Blick auf das Greiferelement vollständig hindurchführbar ist, auch wenn dies vom Schälprozess und/oder aufgrund von anderen Bauteilen, wie bspw. dem Stützelemente, in einer Ausführungsform des bestimmungsgemäßen Betriebs, unterbunden wird.

Bei einer weiter verbesserten Ausführungsform der Schälvorrichtung kann ein Vorteil darin bestehen, dass die Greifereinheit zwei oder mehr Greiferelemente aufweist, wobei ein Motor vorgesehen ist, mittels welchem über mindestens ein Übertragungselement und/oder eine Getriebeeinheit die zwei oder mehr Greiferelemente rotativ antreibbar sind, insbesondere schritt- oder winkelabhängig antreibbar sind.

Das Übertragungselement kann ein endlos umlaufendes Transmissionsband, insbesondere ein Zahnriemen sein. Bei einer alternativen Ausführungsform erfolgt die Kraftübertragung durch ein Getriebe, über die die mindestens zwei Greiferelemente angetrieben werden. Hierdurch wird sowohl eine baulich kompakte und wirtschaftlich vorteilhafte Bauform erreicht.

Insgesamt können alle Antriebe und Motoren der Schälvorrichtung auch als elektromagnetische Direktantriebe ausgebildet werden, wodurch die Anzahl der bewegten oder drehenden Komponenten und Bauteile weiter verringert werden kann, wie beispielsweise die Übertragungsriemen, so dass die Schälvorrichtung baulich noch kleiner ausgestaltet werden kann und sich zusätzlich besser reinigen lässt.

Insbesondere kann die Antriebseinheit für die Schäleinheit ein elektro-magnetischer, linearer Direktantrieb sein, der regelmäßig keine Kraftübertragungen erfordert. Insbesondere kann eine oder können mehr als eine Linearführung als elektromagnetische Antriebsbahnen ausgebildet sein und die verfahrbare Schäleinheit weist einen Antriebsabschnitt (Mover) auf, der beispielsweise einen ferromagnetischen Abschnitt aufweist.

In analoger Weise kann auch der Antrieb für die Greiferelemente als elektromagnetische Direktantriebe ausgeführt werden, bei welchen regelmäßig keine Übertragungselemente erforderlich sind, weil beispielsweise Dreh- und Festlager des Greiferelementes einen kranzförmigen Direktantrieb bilden.

Bei einer weiter verbesserten Ausführungsform der Schälvorrichtung kann ein Vorteil darin bestehen, dass die Schäleinheit an einer Linearführung parallel zur Behandlungsachse (AA) verschieblich gelagert ist und/oder über einen Antrieb motorisch parallel zur Behandlungsachse (AA) antreibbar ist.

Bei einer vorteilhaften Ausführungsform ist die Linearführung mindestens eine Stange oder ein Rohr. Die mindestens eine Stange oder das mindestens eine Rohr ist vorteilhafterweise hängend angeordnet, so dass im Verfahrbereich der Schäleinheit keine Auflageflächen angeordnet sind.

Bei einer vorteilhaften Ausführungsform sind die Linearführungen der Stator oder der Antriebsstrang eines elektro-magnetischen Antriebes und die Schäleinheit bilden den elektro-magnetisch angetriebenen Mover oder Fahrschlitten. Hierzu weist die Schäleinheit entsprechende magnetische oder magnetisierbare Bauteile auf, die beispielsweise ferromagnetisch ausgebildet sind.

Bei einer weiter verbesserten Ausführungsform der Schälvorrichtung kann ein Vorteil darin bestehen, dass die Schäleinheit eine Schnellkupplung aufweist oder hiermit verbunden ist, um diese von der Antriebseinheit zu lösen und zu entnehmen.

Hierbei wird die Schäleinheit beispielsweise über ein mechanisches Verbindungsglied, wie beispielsweise im einfachsten Fall eine Schraubverbindung, eine Schnellkupplung oder einen Rastbolzen, mit einem Koppelelement verbunden, das als Teil der Antriebseinheit oder als Übertragungselement vertikal antreibbar ist. Bei einer vorteilhaften Ausführungsform umfasst die Antriebseinheit einen Motor, eine Antriebsspindel, ein Übertragungselement und ein Koppelelement. Hierbei weist das Koppelelement eine von der Antriebsspindel verschiebliches Spindelmutter auf.

Bei einer weiter verbesserten Ausführungsform der Schälvorrichtung kann ein Vorteil darin bestehen, dass diese ein Gehäuse mit einer Zuführungsseite umfasst, wobei mindestens ein Schälraum und ein Antriebsraum umfasst sind. Zusätzlich kann ein Transmissionsraum vorgesehen sein.

Der Transmissionsraum zeichnet sich insbesondere dadurch aus, dass in diesem die viele oder aller der kraftübertragenden Bauteile für beispielsweise die Greifereinheit und die Schäleinheit angeordnet sind. Dies sind beispielsweise Zahnriemenkränze, Zahnriemenscheiben, Zahnriemen, Getriebe, Transmissionsriemen und/oder sonstige insbesondere bewegte Kraft und/oder Bewegung übertragende Elemente.

Eine weitere Verbesserung kann darin bestehen, dass im Antriebsraum beispielsweise ein Druckluftkompressor, pneumatische Ventile, eine Wasserpumpe sowie Motoren und/oder Antriebseinheiten für Rotations- und Hubbewegungen angeordnet sind. Weiterhin kann ein Vorteil darin bestehen, dass die Steuereinheit in dem Antriebsraum oder benachbart zum Antriebsraum angeordnet ist.

Diese Ausführungsform kann dahingehend weiter verbessert werden, dass ein Wartungsraum vorgesehen ist. Vorteilhafterweise ist in vertikaler Richtung, also in Schwemm- oder Fallrichtung, der Schälraum oberhalb von dem Wartungsraum angeordnet und der Antriebsraum seitlich angrenzend angeordnet.

Dabei zeichnet sich der Schälraum insbesondere dadurch aus, dass darin die Schäleinheit angeordnet ist. Der Antriebsraum zeichnet sich insbesondere dadurch aus, dass in diesem mindestens ein Teil, vorteilhafterweise alle Motoren oder Motorgehäuse untergebracht sind. Neben Antriebseinheiten und Motoren für Rotations- und Hubbewegungen, können in dem Antriebsraum weitere Geräte und Komponenten untergebracht sein, wie beispielsweise ein Druckluftkompressor, ein Drucktank, pneumatische Ventile und/oder eine Wasserpumpe.

Vorteilhafterweise ist die Steuereinheit mindestens teilweise im Antriebsraum oder ein einem Raum angrenzend zur Antriebsraum angeordnet. Dieser weitere Raum kann ein Schaltschrank sein. Die Steuereinheit ist vorteilhafterweise mit einer Bedienereinheit verbunden oder weist diese auf, welche insbesondere einen Monitor, ein Tasten- oder Eingabefeld und/oder einen berührungssensiblen Monitor (TouchScreen) aufweist.

Ein Vorteil der Schälvorrichtung besteht darin, dass diese sehr kompakt und leichter als vergleichbare Schälmaschinen ist, so dass eine Aufstellung schneller und einfacher erfolgen kann, insbesondere wenn die Schälvorrichtung beziehungsweise deren Gehäuse mit Rollen versehen ist, so dass diese zu Verkaufskampagnen mobil und schnell einsetzbar ist.

Die Größe des Gehäuses der Schälvorrichtung beträgt beispielsweise 700 x 700 x 1400 mm (L x B x H) und weist eine 230 V Stromversorgung. Über einen mit Frischwasser gefüllter Tank kann der Betrieb der Schälmaschine ohne sonstige Medienanschlüsse ortsunabhängig erfolgen (Plug-and-Play).

Ein Endverbraucher oder untrainierter Bediener hat somit die Möglichkeit, ohne Fachwissen die Schälmaschine eigenständig zu bedienen, ohne weitere Voreinstellungen beispielsweise hinsichtlich der Art des Spargels (grün oder weiß) oder der geometrischen Abmessungen. Somit wird automatisch, ohne weitere vorzunehmende manuelle Einstellungen, ein gleichmäßiges rundes und ressourcenschonenden Schälergebnis erreicht. Das Bedienelement oder der Touchscreen hat im Wesentlichen nur die Funktion dem Bediener eine Anweisungsanimation zur Verfügung zu stellen, wobei ein geschulter ServiceTechniker hierüber oder einen anschließbaren oder verbindbaren Computer, wie bspw. einen Laptop, Eingaben vornehmen und Parametersätzen anpassen kann.

Eine Verbesserung kann darin bestehen, dass oberhalb des Schälraumes und/oder des Antriebsraumes ein Transmissionsraum vorgesehen ist. Dieser zeichnet sich dadurch aus, dass in diesem eine Mehrzahl, idealerweise alle Übertragungselemente, Getriebe, Zahnriemenkränze/-scheiben und/oder sonstige bewegte Teile aufgenommen sind. Hierbei sind die eigentlichen Motoren oder Motorgehäuse nicht im Transmissionsraum angeordnet. Vorteilhafterweise sind eine Mehrzahl von Motoren und/oder Motorgehäuse in dem Antriebsraum angeordnet, insbesondere die Motoren, deren Übertragungselemente, Getriebe, Zahnriemenkränze/-scheiben und/oder sonstige bewegte Teile im Transmissionsraum angeordnet sind.

Eine vorteilhafte Ausführungsform kann darin bestehen, dass die Zuführungsseite auch die Abführungs- oder Ausleitseite ist, also ein Gemüse entlang der Behandlungsachse in der ersten Richtung eingeführt, insbesondere nach unten abgesenkt wird, und in entgegengesetzter Richtung wieder abgeführt wird, also nach oben herausgeführt.

Bei einer alternativen Ausführungsform ist die Zuführseite unterschiedlich zur Abführungs- oder Ausleitseite. Eine vorteilhafte Ausführungsform kann hierbei darin bestehen, dass im Bereich des Schälraumes mindestens eine seitliche Ausleitöffnung vorgesehen ist, über die das geschälte Gemüse insbesondere quer zu Behandlungsachse AA abtransportiert und/oder entnommen werden kann.

Vorteilhafterweise ist ein schwenkbares Auffang- und/oder Ausleitförderelement vorgesehen, welches nach der Schälung einschwenkbar und/oder aktivierbar ist und insbesondere bei der Schälung, beispielsweise analog den schwenkbaren Stützelementen, aus dem Bereich der geschnitten und herabfallenden Schalen verbringbar ist.

Bei einer weiter verbesserten Ausführungsform kann im Schälraum mindestens ein zweiter, schenkbarer Greifer angeordnet sein, mittels welchem das Gemüse nach der Schälung ergriffen und gesteuert auf einem Auffang- und/oder Ausleitförderelement abgelegt oder aus dem Schälraum herausgeführt werden kann.

Vorteilhaft kann sein, wenn im Schälraum und/oder dem Wartungsraum Sprühauslässe vorhanden sind, insbesondere Sprühauslässe, die mit einem im Inneren oder außen am Gehäuse angeordneten Wasseranschluss verbunden sind oder verbindbar sind. Auf diese Weise kann bei beispielsweise geschlossener Gehäusetür, die vorgenannten Räume nach unten abgeschwemmt und von groben Anhaftungen befreit werden.

Vorliegend soll "Raum" nicht einschränkend verstanden werden und meint ein mehrseitig mit Wänden oder Platten umschlossenes Volumen. Hierbei kann ein "Raum" ständige Öffnungen und/oder Öffnungselemente, wie Türen oder Klappen aufweisen.

Bei einer Ausführungsform der Schälvorrichtung kann ein weiterer Vorteil darin bestehen, dass auf der Zuführungsseite und stromaufwärts zum Schälraum oder zwischen dem Transmissionsraum und dem Schälraum ein Trennelement angeordnet ist, insbesondere ein Trennelement, das den Schälraum von der Zuführungsseite oder von dem Transmissionsraum quer zur Behandlungsachse (AA) trennt, und wobei das Greiferelement an oder in dem Trennelement angeordnet ist, insbesondere an oder in dem Trennelement rotierbar um die Behandlungsachse (AA) gelagert ist. Das Trennelement kann insbesondere als Tragplatte ausgebildet sein.

Unter Zuführungsseite soll allgemein die Vorrichtungsseite oder Fläche verstanden werden, von oder an der das Gemüse zugeführt wird. Vorliegend stehen beispielsweise die Behandlungsachsen (AA) senkrecht auf der Zuführungsseite.

Vorteilhafterweise bildet das mindestens eine Greiferelement die Zugangsöffnung für das Gemüse in den Schälraum. Diese meint, dass das Gemüse durch den Greifer hindurchgeführt werden muss, um in den Schälraum und beispielsweise in Kontakt mit dem Stützelement zu gelangen.

Bei einer weiter verbesserten Ausführungsform der Schälvorrichtung kann ein Vorteil darin bestehen, dass in Schwerkraftrichtung unterhalb der Schäleinheit eine Zerkleinerungseinheit angeordnet ist.

Diese vorteilhafterweise motorisch angetriebene Zerkleinerungseinheit kann in der Art eines Schredders oder eines Häckslers ausgebildet sein und rotierende Messer oder Krallen aufweisen. Vorteilhafterweise ist die Zerkleinerungseinheit langsam laufend, so dass kein oder weitgehend keine zusätzliche Verschmutzung im Schälraum erfolgt.

Vorteilhafterweise ist die Zerkleinerungseinheit über eine Kupplungseinheit an einem Tragelement ortsfest angebracht und kann vollständig entnommen werden, analog der Schäleinheit. Diese Kupplungseinheit kann als Schnellkupplung, als Rastbolzen oder in einer sonstigen Weise ausgeführt sein.

Von der Erfindung ist eine zweite Schälvorrichtung zum Schälen von stangenförmigen Gemüse umfasst, insbesondere von grünem und weißen Spargel, mit einer Längsachse (A), wobei die Schälvorrichtung Folgendes umfasst:
- eine Zuführungsseite für das Gemüse,
- eine Greifereinheit mit mindestens einem Greiferelement zum Halten eines Gemüses,
- eine entlang der Längsachse (A) motorisch verfahrbare Schäleinheit, wobei die Greifereinheit ausgebildet ist, das Gemüse ortsfest zu halten, und wobei das mindestens eine Greiferelement derart gelagert und motorisch antreibbar ist, dass das Gemüse um die Längsachse (A) rotierbar ist,
- eine Steuereinheit zum Steuern und Regeln der Schälvorrichtung.

Hierbei ist vorgesehen, dass das mindestens eine Greiferelement ein fluidisch öffnender und schließender Greifer ist, welcher insbesondere eine Ring- oder Kranzform aufweist, wobei das Gemüse beim Ein- oder Ausführen in das Greiferelement in Richtung der Längsachse (A) hindurchgeführt werden kann, insbesondere vollständig hindurchgeführt werden kann.

Zu den einzelnen Begriffen, Vorteilen und Aspekten gilt das vorstehend Ausgeführte, wenn nicht etwas Abweichendes beschrieben wird.

Bei einer verbesserten Ausführungsform der Schälvorrichtung kann ein Vorteil darin bestehen, dass auf der Zuführungsseite eine Sensoreinheit stromaufwärts zum Greiferelement angeordnet ist, wobei ein Gemüse
- beim Zuführen in Richtung der Längsachse (A) auf einer Teillänge an der Sensoreinheit vorbeigeführt und sensorisch erfasst werden kann und/oder
- nach dem Schließen des Greiferelementes auf der Zuführungsseite sensorisch erfassbar ist.

Bei einer Ausführungsform kann vorgesehen sein, dass die die Steuereinheit ausgebildet ist, damit wenn der Kopf des Gemüses im Bereich der Greifereinheit angekommen ist, beispielsweise in der horizontalen Mitte des Greiferelementes, dieser mittels Pressluft in einer vertikalen, zentralen Lage festgehalten wird. Weiterhin ist die Steuereinheit ausgebildet, dass bei der gleichzeitigen Schälung von zwei unterschiedlich langen Gemüsestangen das klemmende Halten in den Greiferelementen nacheinander erfolgt. In einem ersten Schritt wird der Kopf der kürzeren Gemüsestange erkannt, woraufhin das Absenken zeitweise gestoppt und die zugehörige Greifereinheit geschlossen wird. Anschließend werden beide oder nur das Stützelement der längeren Gemüsestange abgesenkt, bis eine definierte Endposition erreicht ist und das Greiferelement in analoger Weise wird geschlossen.

Bei einem weiter verbesserten Verfahren kann das (inaktive) Stützelement nach dem Schließen des ersten Greiferelementes unmittelbar weggeschwenkt werden. Bei der längeren Spargelstange beginnt der Vorgang erneut. Sind die Gemüsestangen annähernd von gleicher Länge, erfolgt das Schließend der Greiferelemente und das Halten zeitlich parallel.

Alle Merkmale und Merkmalskombinationen der ersten Schälvorrichtung sind in identischer oder analoger Weise kombinierbar. Von der Erfindung ist weiterhin ein Schälverfahren zum Betrieb einer Schälvorrichtung für stangenförmiges Gemüse, insbesondere von grünem und weißen Spargel und/oder aufweisend einen Gemüsekopf und einen Gemüsefuß, mit einer Längsachse (A) umfasst, wobei folgende Schritte umfasst sind:
- Zuführung des Gemüses in ein Greiferelement, wobei das Gemüse in Richtung einer Behandlungsachse (AA) zugeführt wird,
- Halten des Gemüses durch das Greiferelement in einem Haltebereich der Längsachse (A),
- Schälung des Gemüses in mindestens drei Schälschritten, in dem mindestens ein Messer an das Gemüse gepresst wird und parallel zur Behandlungsachse (AA) und/oder parallel zur Längsachse (A) verfahren wird, und wobei eine Steuereinheit vorgesehen ist zum Steuern und Regel des Betriebes der Schälvorrichtung.
   Hierbei erfolgt
   i) bei der Zuführung und/oder
   ii) nach der Zuführung und vor der Schälung
   ein Sensorschritt zur Erfassung von Messwerten des Gemüses, der mindestens einen Erfassungsschritt umfasst, indem das Gemüse mindestens in einem Erfassungsschritt hinsichtlich
- des Durchmessers,
- der Länge,
- des Durchmesserverlaufes und/oder
- der Farbe
   sensorisch erfasst wird.

Im Anschluss an die Schälung erfolgt die Ausleitung, die in Gegenrichtung zur Zuführung des Gemüses entlang der Behandlungsachse (AA) erfolgen kann, insbesondere ebenfalls für die Zuführungsseite. Alternativ kann die Ausleitung über eine andere Seite, die nicht die Zuführungsseite ist, erfolgen, insbesondere quer zur Behandlungsachse.

Bei einer vorteilhaften Ausführungsform wird beispielsweise die Gradzahl der Drehbewegung des Greiferelementes in abhängig von dem mittels des Geometriesensors ermittelten Durchmesser des Spargels eingestellt. Eine dicke Gemüsestange werden über eine geringere Gradzahl pro Drehschritt mehr Schälschnitte zugeteilt. Bei einer dünnen Gemüsestange werden weniger Schnitte vorgesehen, so dass eine geringe Anzahl an Schälschritten und Hubbewegungen vorgenommen werden muss. Die Anzahl der Schälschnitte kann insbesondere zwischen 5 und 8 liegen. Diese sind als Parameter in der Steuereinheit hinterlegt und werden automatisiert, durchmesserbezogen geregelt. Alternativ lassen sich Parameter auch über die Bedienereinheit außen am Gehäuse einstellen, wie beispielsweise über einen Touchscreen (HMI). Der zum Spargeldurchmesser und zur Spargelart richtige Anpressdruck (Schäldruck) ist ebenfalls aus mindestens einem der Messewerte der Sensoreinheit 104 abgeleitet und wird beispielsweise mittels eines Proportionaldruckregelventil vollautomatisch geregelt.

Die Zuführung des Gemüses kann manuell erfolgen oder mittels einer mindestens teilautomatisierten Transport- und/oder Transfereinheit, die beispielsweise Halte- und/oder Greifvorrichtungen aufweist. Diese Transport- und/oder Transfereinheit beispielsweise als Roboterarm, Pick-and-Place-Roboter und/oder Portalroboter ausgebildet sein beziehungsweise diese umfassen.

Eine weiter verbesserte Verfahrensvariante sieht vor, dass der Durchmesser auf zwei oder mehr Höhenlagen der Längsachse erfasst wird. Somit kann beispielsweise eine starke Durchmesserabnahme (Verjüngung) am Kopfende des Gemüses erfasst werden und das Greiferelement teilweise geschlossen werden, um den Durchmesser zu verringern für eine verbesserte seitliche Führung und zur Vermeidung eines Herausfallens.

Weiterhin kann einer Verbesserung darin gesehen, wenn der Durchmesser im Haltebereich des Gemüses erfasst wird. Der Haltebereich ist hierbei der Abschnitt auf der Längsachse des Gemüses, wo beispielsweise das Greiferkissen klemmend in Anlage gebracht wird. Durch die Erfassung des Durchmessers im Haltebereich kann der Druck und/oder der Verschlussdurchmesser des Greiferelementes geregelt werden, um Verletzungen des Gemüses zu vermeiden.

Bei einer weiter verbesserten Verfahrensführung wird als Schälparameter die Festigkeit des Gemüses erfasst, wobei es besonders vorteilhaft ist, wenn die Festigkeit über ein Verhältnis aus Verschlusswinkel oder Verschlussdurchmesser des Greiferelementes und der Klemmkraft bei einem gemessenen Durchmesser des Gemüses ermittelt wird. In Abhängigkeit von der Festigkeit, kann nachfolgend beispielsweise die Klemm- oder Greifkraft geregelt werden und/oder die Anpresskraft der Messer an das Gemüse geregelt werden.

Wie vorliegend bereits ausgeführt, kann mindestens ein Messwert auch kombinatorisch ermittelt werden, indem von beispielsweise einer Zeilenkamera der Eintritts- und der Austrittszeitpunkt erfasst wird und über beispielsweise die Motorsteuerung und/oder einen sonstigen Wegsensor der Laufweg, die Vortriebsgeschwindigkeit und/oder -dauer des Stützelementes erfasst und gemeinsam ausgewertet werden. Eine Verbesserung des Verfahrens kann somit darin bestehen, dass der Betrieb der Schälvorrichtung durch die Steuereinheit auf Basis der Messwerte aus dem Sensorschritt erfolgt, indem mindestens ein Schälparameter in Abhängigkeit von den Messwerten angepasst wird, insbesondere
- eine Anzahl der Schälschnitte in Umfangsrichtung, insbesondere der parallelen Schälschnitte,
- eine Schällänge mindestens eines Schälschnittes entlang der Behandlungsachse (AA) und/oder Längsachse (A),
- eine Anfangsposition und/oder Endposition mindestens eines Schälschnittes,
- eine Anpresskraft des mindestens einen schwenkbar gelagerten Messers auf mindestens einer Teillänge der Schällänge,
- ein Haltebereich des Greiferelementes entlang der Längsachse (A) des Gemüses beim Halten,
- eine Haltekraft des Greiferelementes für mindestens eine Teildauer des Haltens des Gemüses.

Bei einem weiter verbesserten Verfahren kann ein Vorteil darin bestehen, dass die Schällänge in mindestens zwei Teillänge in Richtung der Längsachse (A) unterteilt ist, wobei sich die Anzahl der Schälschnitte in den beiden Teillängen um mindestens einen Schälschnitt unterscheiden.

Diese Verfahrensvariante erlaubt beispielsweise bei einem Gemüse, das in Richtung der Längsachse (A) am Fußende einen deutlich größeren Durchmesser aufweist als am Kopfende, das nur im zweiten Teil, in der Nähe des Fußendes, ein oder mehrere kurze, ergänzende Schälschnitte vorgenommen werden, weil der darüber angeordnete Bereich in Kopfnähe bereits vollständig geschält ist.

Eine weitere Verbesserung des Verfahrens kann darin bestehen, dass in einem Erfassungsschritt das Gemüse hinsichtlich seiner Gesamtlänge in Richtung der Längsachse (A) erfasst wird. Bei einer vorteilhaften Ausführungsform wird hierbei das Gemüse an einem Positionssensor vorbeigeführt, welcher
- die Strecke vom Fußende bis zum Kopfende erfasst und/oder
- den Eintritt des Fußendes und den Austritt des Kopfendes erfasst, und wobei die Strecke zwischen Fuß- und Kopfende durch einen Wegsensor erfasst wird, insbesondere mittels eines mit einer Halte- und Zentriervorrichtung verbundenen Wegsensors. Die Halte- und Zentriereinrichtung kann hierbei identisch mit dem Stützelement sein.

Bei einer weiteren vorteilhaften Ausführungsform kann vorgesehen werden, dass mittels einen Laserscanners mindestens ein Teilabschnitt oder Teillänge des Gemüses erfasst wird, insbesondere die Teillänge, die nach dem Einführen oder Zuführen durch das Greiferelement bis zum Kontakt zu einem definierten Anschlag, wie beispielsweise einem Stützelement, über das Greiferelement und/oder auf der Zuführungsseite übersteht. Mittels des Laserscanners kann vorteilhafterweise die vollständige, überstehende Geometrie des Gemüses erfasst werden, insbesondere die Länge und der Durchmesser(-verlauf). Bei einer verbesserten Ausführungsform wird mittels des Lasersensors bereits bei der Einführung des Gemüses auch mindestens ein Teilabschnitt und/oder eine Teillänge des (anschließend) nicht überstehenden Teils erfasst.

Eine weitere Verbesserung des Verfahrens kann darin bestehen, dass eine Schälvorrichtung nach einem der vorstehenden Ausführungsformen und Varianten verwendet wird, wobei die Schälvorrichtung gemäß der ersten oder der zweiten Schälvorrichtung ausgebildet sein kann, insbesondere gemäß der ersten Schälvorrichtung.

Von der Erfindung ist ein zweites Verfahren zum Betrieb einer Schälvorrichtung für stangenförmiges Gemüse umfasst, insbesondere eine Schälvorrichtung für grünen und/oder weißen Spargel und/oder aufweisend einen Gemüsekopf und einen Gemüsefuß, mit einer Längsachse (A), wobei folgende Schritte umfasst sind:
- Zuführung des Gemüses in ein Greiferelement, wobei das Gemüse in Richtung einer Behandlungsachse (AA) zugeführt wird,
- Halten des Gemüses durch das Greiferelement in einem Haltebereich der Längsachse (A),
- Schälung des Gemüses in mindestens drei Schälschritten, in dem mindestens ein Messer an das Gemüse gepresst wird und parallel zur Behandlungsachse (AA) und/oder parallel zur Längsachse (A) verfahren wird, und wobei eine Steuereinheit vorgesehen ist zum Steuern und Regeln des Betriebes der Schälvorrichtung. Hierbei wird bei der Zuführung das Gemüse mit einem Ende durch das Greiferelement mindestens mit einer Teillänge in Richtung der Längsachse (A) hindurchgeführt und am gegenüberliegenden Ende mittels des Greiferelemente gehalten.

Alle Merkmale und Merkmalskombinationen des ersten Schälverfahrens sind in identischer oder analoger Weise kombinierbar.

Eine Verbesserung des zweiten Verfahrens kann darin bestehen, dass eine Schälvorrichtung nach einem der vorstehenden Ausführungsformen und Varianten verwendet wird, wobei die Schälvorrichtung gemäß der ersten oder der zweiten Schälvorrichtung ausgebildet sein kann, insbesondere gemäß der zweiten Schälvorrichtung.

Vorliegend sollen alle Vorteile, Aspekte und Merkmale der ersten und/oder der zweiten Schälvorrichtung in identischer oder analoger Weise für das erste und/oder zweite Schälverfahren Anwendung finden und gelten - und umgekehrt. Nur aus Gründen der Effektivität und Lesbarkeit wurden von mehrfachen Wiederholungen Abstand genommen.

Weiterhin meint vorliegend ein "Messwert" jede analoge oder digitale physikalische, chemische, elektrische oder sonstige Größe, die direkt oder mittelbar durch einen Sensor erfasst wurde. Dies unabhängig von der Art der nachfolgenden Aufbereitung, Filterung, Konvertierung oder Datenverarbeitung, insbesondere einer Analog-DigitalWandlung.

Auch wenn vorliegend durchgängig von "Gemüse" gesprochen wird, soll dies grundsätzlich nicht einschränkend zu verstehen sein und damit jegliche stangenförmige Gemüsesorte gemein sein, die mittels einer solchen Schälmaschine geschält werden können. Insbesondere sind mit "Gemüse", "Stangengemüse" und/oder "stangenförmigen Gemüse" grüner und/oder weißer Spargel (Aspargatus) gemeint und darunter zu verstehen.

Weitere Einzelheiten und Vorteile der Erfindung sollen nun anhand eines in den Zeichnungen dargestellten Ausführungsbeispiels näher erläutert werden.

Es zeigen:
- Fig. 1: eine perspektivische Darstellung der Schälvorrichtung mit den zentralen Komponenten und Bauteilen,
- Fig. 2: eine perspektivische Darstellung eines Teils der Antriebseinheit,
- Fig. 3: eine perspektivische Schnittdarstellung des Greiferelementes,
- Fig. 4: eine Draufsicht auf den geöffneten Transmissionsraum und die Antriebseinheit,
- Fig. 5: eine perspektivische Darstellung des oberen Teils der Schälvorrichtung,
- Fig. 6: eine perspektivische Darstellung der geöffneten Schälmaschine und
- Fig. 7: eine perspektivische Darstellung der gelösten Schäleinheit von der Antriebseinheit.

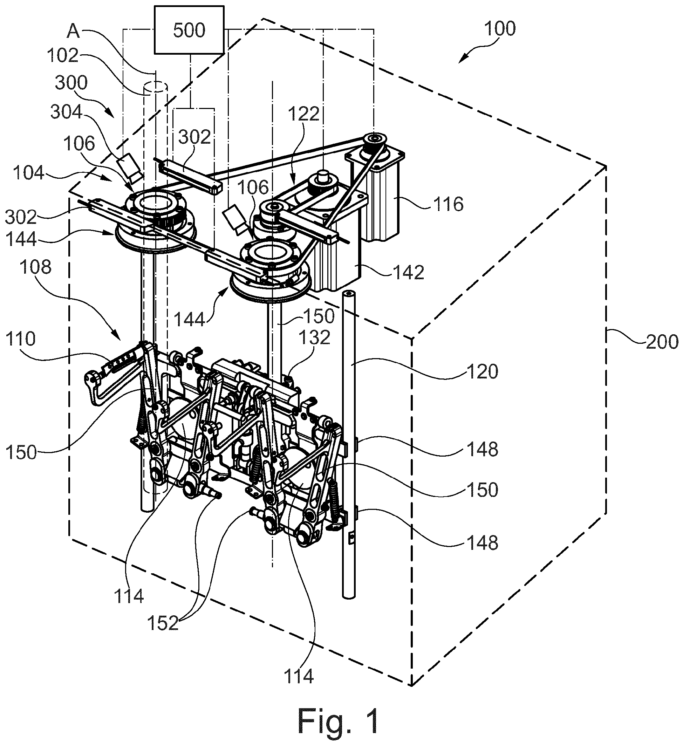

In der Fig. 1 ist ein schematischer Aufbau der Schälvorrichtung 100 zum Schälen von stangenförmigem Gemüse dargestellt (102), wobei das Gehäuse 200 als gestrichelter Körper angedeutet ist. Die Schälvorrichtung 100 umfasst eine Greifereinheit (104) mit zwei Greiferelementen (106), einer Schäleinheit 108 mit zwei schwenkbar gelagerten Messerpaaren 110 und einer Steuereinheit (500). Die beiden Greiferelemente 106 sind jeweils in einer Lagereinheit 144 gelagert und können somit um die Behandlungsachse AA bzw. die Längsachse A eines erfassten Gemüses 102 rotiert werden. Als Motor 116 ist ein Schrittmotor (Stepper) oder ein Servomotor vorgesehen, der über einen Riemen als Übertragungselement 118 beide Greiferelemente 106 gemeinsam antreibt.

Weiterhin ist eine Sensoreinheit 300 vorgesehen, die benachbart zu jeder der beiden Behandlungsachsen AA einen Geometriesensor 302 und einen Farbsensor 304 umfasst. Als Geometriesensor 302 ist in dem gezeigten Bespiel eine dem Grunde nach bekannte Zeilenkamera vorgesehen, die einer Erfassungseinheit gegenübersteht und durch deren Strahlengang Gemüse 102 geführt und dessen Durchmesser erfasst wird. Der Farbsensor 304 ist vorliegend ein optischer Farb- und Kontrastsensor, der die Farbe und/oder den Kontrast des Gemüses erfasst und allein oder mittels der Steuereinheit 500 einen Farbwert und damit die Unterscheidung zwischen beispielsweise einem weißen und einem grünen Spargel 102 vornehmen kann. Der als Liniensensor ausgebildete Geometriesensor 302 und der Farbsensor 304 sind in Zuführungsrichtung des Gemüses 102 entlang der Behandlungsachse AA oberhalb, also vor den Greifen 106 angeordnet.

Die Schäleinheit 108 ist über seitliche Gleitkörper 148 mit zwei Linearführungen 120 verbunden und hieran verschieblich gelagert. Die Antriebseinheit 122 umfasst weiterhin eine in zwei Lagern 128 rotativ gelagerte und vertikal ausgerichtete Antriebsspindel 130, die von dem Motor 142 über ein Übertragungselement 146 in Rotation gebracht wird. Die zugehörige Spindelmutter 132 ist drehfest an der Schäleinheit 180 angeordnet und hebt oder senkt diese drehrichtungsabhängig.

Die Messer 110 sind paarweise an schwenkbar gelagerten Schwenkarmen 150 angeordnet, die in Richtung des Gemüses 102 bzw. der Bearbeitungsachse AA geschwenkt werden können und auf der Oberfläche des Gemüses 102 anliegen. Die Schwenkarme 150 sind über die Anschlüsse 152 hinsichtlich ihrer Schwenkbewegung aktivierbar.

Erfindungsgemäß erfassen die Geometriesensoren 302 den Durchmesser des Gemüses 102 und in der Steuerung 500 wird eine vorteilhafte Anzahl von parallelen Schälschnitten 260 für Schälung des Gemüses 102 und eine zugehörige schrittweise Verstellung des Drehwinkels der Greiferelemente 106 festgelegt. Da die Drehbewegung der beiden Gemüsestangen 102 gekoppelt ist und eine vollständige Entfernung der Schale erforderlich ist, wird die Festlegung der Schälschritte und der zugehörigen Verstellschritte des Drehwinkels auf Basis des Durchmessers der dickeren Gemüsestange vorgenommen, wobei andere Steuerungsvorgaben, wie bzw. die Festlegung aufgrund eines Mittelwertes ebenfalls möglich sind.

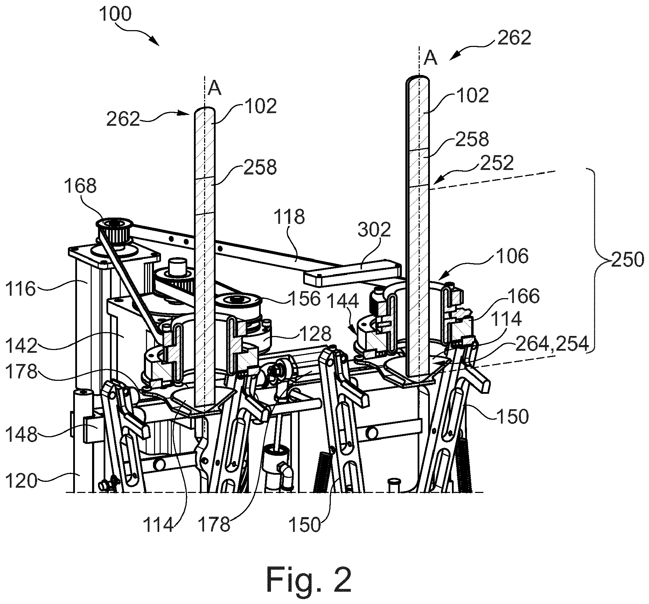

Der Zuführungsschritt besteht bei der gezeigten Ausführungsform darin, dass das Gemüse 102 von oben in Ausrichtung der eigenen Längsachse A parallel zur Behandlungsachse AA in das jeweilige Greiferelement 106 ein- und hindurch geführt wird. Das Fußende 264 weist nach unten, wird also zuerst durch das Greiferelement 106 hindurchgeführt. Dabei ist, wie insbesondere in der Figur 2 im Detail dargestellt, das konus- oder tellerartige Stützelement 114 herausgeschwenkt und steht quer zur Behandlungsachse AA. Das Stützelement 114 ist an der Schäleinheit 108 gelagert und mit dieser vertikal verfahrbar. Das Fußende 264 wird in Anlage in dem Stützelement 114 angebracht und somit in vertikaler Richtung gehalten. Vom Stützelement 114 gehalten wird das Gemüse 102 vertikal nach unten geführt, bis sich der für das Gemüse 102 definierte Haltebereich 258 auf der Höhe des Greiferelementes 106 befindet. Das Gemüses 102 wird in dem Greiferelement 106 fixiert, indem das flexible, ringförmige Greiferkissen 156 mit Druckluft über den jeweiligen Anschluss 152 beaufschlagt wird.

In der Figur 2 ist die Situation dargestellt, dass die Stützelemente 114 an der Schwenkachs 178 um 90° verschwenkt wurden und das Gemüse 102 auf den ausgeschwenkten Stützelementen 114 mit dem jeweiligen Fußende 264 unmittelbar unterhalb der Greiferelemente 106 aufsteht. Die Greiferkissen 156 sind dabei geöffnet, also (noch) nicht mit Druckluft beaufschlagt, so dass das Gemüse 102 frei steht oder anliegt und dabei nicht eingeklemmt wird. Der Abstand zwischen dem Geometriesensor 302 und dem Stützelement 114 ist bekannt und kann, wie vorstehend beschrieben zu dem vertikalen Verfahrweg hinzuaddiert werden, wenn das Stützelement 114 mit dem Gemüse 201 bis zum Verlassen des Kopfendes 262 aus dem Erfassungsbereich des Geometriesensors 302 verfahren wird.

Bei einer nicht dargestellten Ausführungsform ist als Geometriesensor 302 ein Laserscanner vorgesehen, der die überstehende Länge des Gemüses 102 über dem Greiferelement 106 und auch den Durchmesser oder Durchmesserverlauf erfasst. Das Gemüse 102 muss in diesem Fall nicht zur Längenvermessung durch das Stützelement 114 verfahren werden, sondern der Haltebereich 258 im Greiferelement 106 kann unmittelbar angefahren werden.

Der Sensorschritt wird vorteilhafterweise mit dem Zuführungsschritt zeitlich überlappend durchgeführt. Der Geometriesensor 302 erfasst beim Eintritt in den Erfassungsbereich der Zeilenkamera das Gemüse 102, weiterhin ist die Position des Stützelementes 114 bekannt, auf dem das Fußende 264 aufsteht. Das Gemüse 102 wird anschließend so lange vertikal nach unten verfahren, bis das Kopfende 262 des Gemüses 102 den Erfassungsbereich des Geometriesensors 302 verlässt. Auf diese Weise wird die Gemüselänge 102 ermittelt, indem weiterhin die Messewerte des Inkrementalgebers des Motors 142, die Dauer der vertikalen Fahrt und/oder die Geschwindigkeit der vertikalen Absendung bis zum Austritt aus dem Erfassungsbereich gemeinsam ausgewertet werden. Dabei wird die vertikale Absenkung nur so lange vorgenommen, dass das Kopfende 262 sich noch auf der Höhe des Greiferelementes 262 befindet und von diesem gestützt wird, so dass es nicht seitlich entfallen kann. Parallel wird mittels des Farbsensors 304 erfasst, ob es im Falle von Spargel, grüner oder weißer Spargel ist. Wurde ein grüner Spargel vom Farbsensor erkannt, wird in vertikale Richtung weniger tief gesenkt, wobei diese geringere Absenkung in Abhängigkeit von dem erfassten Durchmesser oder der äußeren Geometrie erfolgen kann, um hinreichend tief aber auch hinreichend weit nach am Kopfende mit dem Schälschritt zu beginnen. Bei einer alternativen Ausführungsform kann vorgesehen sein, dass das Gemüse wieder durch das Stützelement 114 eine definierte Strecke angehoben wird, in Abhängigkeit von der Gemüseart (grüner, weißer Spargel) und/oder den vorgenannten, erfassen Geometrien des Gemüses, bis ein definierter, optimaler Haltebereich 258 erreicht ist. Dieser ist bei grünem Spargel weiter entfernt vom Kopfende 262 als bei weißem Spargel.

Der Sensorschritt und/oder einzelne Erfassungsschritte können auch zeitlich nach dem Zuführungsschritt erfolgen, wenn die jeweiligen Sensoren diesbezüglich ausgebildet und/oder angeordnet sind.

Ein Schälschritt besteht darin, dass
- die Schäleinheit 108 sich in der oberen Position befindet,
- die Messer 110 paarweise mittels der Schwenkarme 150 mit einem definierten Auflagedruck an das Gemüse 102 angelegt werden,
- die Schäleinheit 108 nach unten verfahren wird, bis die Messer 110 über das Fußende 264 hinaus gefahren sind,
- zeitgleiches oder anschließendes Öffnen der Schwenkarme 150,
- Weiterdrehen des Greiferelementes 106 in die nächste Winkelposition und
- Verfahren der Schäleinheit 108 in die obere Position.

Die beiden Schritte des Weiterdrehens des Greiferelementes 106 in die nächste Winkelposition und des Verfahrens der Schäleinheit 108 in die obere Position erfolgen idealerweise parallel.

Hierbei kann die vorgenannte Reihenfolge variiert werden, sofern diese für den beabsichtigten Zweck einer umseitigen, effektiven Schälung vorteilhaft ist, beispielsweise kann das Weiterdrehen erfolgen, wenn die Schäleinheit sich in der oberen Position befindet und die Messer noch nicht angelegt sind.

Wiederholung des Schälschrittes, bis eine Schälung auf dem gesamten Umfang erfolgt ist.

Weiterhin ist in dem gezeigten Beispiel als Option vorgesehen, dass der Anlagedruck der paarweisen Messer 110 über einen gesteuerten Druck beim Schälvorgang geregelt werden kann, weil mit dem Auflagedruck auf die Schältiefe bzw. die Dicke der erzeugten Schale geregelt werden kann. Eine Option dieser Regelung kann somit sein, dass entlang der Behandlungsachse AA der Fluiddruck und damit der Auflagedruck der Messer 110 verändert wird, um weichere Abschnitte des Gemüses 102, wie in der Kopfnähe, geringer mit Druck zu beaufschlagen als härtere Abschnitte, wie in der Fußnähe im unteren Abschnitt des Gemüses 102. Eine weitere Option kann darin bestehen, dass der Auflagedruck in Umfangsrichtung verändert wird. In diesem Fall wird bei insb. den ersten Vollschnitten ein erster Auflagedruck angelegt. Bei einem Teilschnitt, bei dem bereits einseitig oder zweiseitig ein (paralleler) geschälter Bereich auf dem Umfang mit dem Messer 110 kontaktiert wird, kann zur Vermeidung einer Doppelschälung von Teilbereichen oder einer zu großen Eindringtiefe, der Auflagedruck eine geringere Höhe aufweisen. Ein Vollschnitt meint somit in analoger Weise einen Schnitt, bei dem das Messer keinen oder nur einen sehr geringen bereits geschälten Bereich kontaktiert.

Beim Zuführen von beispielsweise grünen oder weißen Spargelstangen, erkennt der Farbsensor 304 die Art des Spargels. Wird eine grüne Spargelstange erkannt, füllt sich das jeweilige Greiferelement 106, während der Spargel mittels der Stützvorrichtung 114 in den Schälraum 202 geführt wird, in Abhängigkeit eines voreingestellten Parameters mit Pressluft. Bei einem grünen Spargel beträgt die Schällänge 250 beispielsweise 10cm, wobei die Endposition 252 durch das Ende des Gemüses 102 am Fußende 264 definiert ist. Ein grüner Spargel wird also in der Regel nicht hinsichtlich der vollständigen Länge in Richtung der Längsachse A erfasst.

Wird beispielsweise eine weiße Spargelstange erkannt, wird das Stützelement 114 so weit in den Schälraum 202 abgesenkt, bis der Kopf des Spargels den Bereich des Geometriesensors 302 verlassen hat, wobei die Gesamtlänge des weißen Spargels erfasst wird. Anschließend wird der Haltebereich des Spargels auf die Höhe des Greiferelementes 106 angehoben, der parallel oder anschließend mit Pressluft beaufschlagt wird, so dass der Spargel am Kopf beziehungsweis kurz unterhalb des Kopfes gehalten wird. Alternativ kann auch vorgesehen sein, dass der Spargel nicht angehoben wird, sondern das Greiferelement 106 unmittelbar um den Spargelkopf geschlossen wird und diesen damit klemmend hält.

In Abhängigkeit des ermittelten Durchmessers der Gemüsestange wird beispielsweise mittels eines nicht dargestellten Proportionaldruckregelventils der Schäldruck des Messers 110 während des Schälschrittes geregelt. Ein dünnes, zerbrechliches Gemüse 102, wie beispielsweise ein dünner Spargel, wird mit geringerem Schäldruck somit sanfter geschält als ein dicker Spargel. Ebenfalls können die weichen Zonen, welche sich unterhalb des Kopfes (Kopfende) befinden, mit einem geringeren Druck geschält werden als die festen Zonen am Fußende. Diese Eigenschaft ermöglicht es, in Verbindung mit der Anzahl der Schnitte, jeden Spargel zu schälen, ohne dabei die Messerstärke zu wechseln.

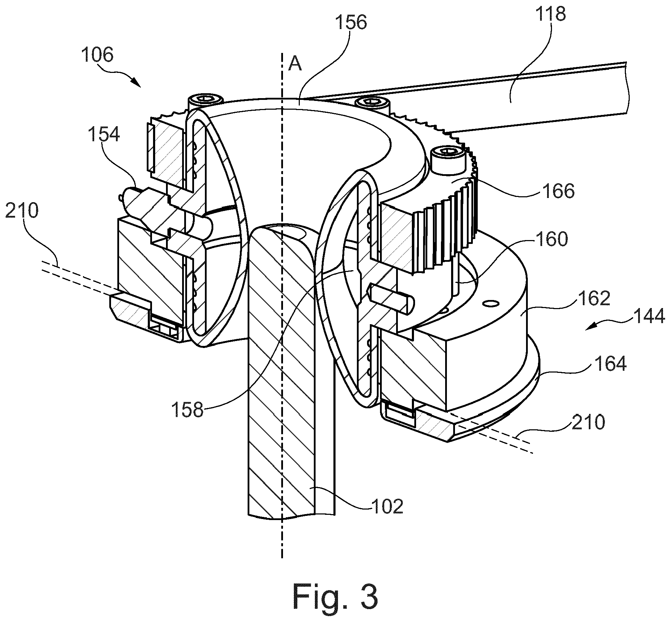

Die Figur 3 zeigt insbesondere das Greiferelement 106 in einer Schnittdarstellung, wobei das Gemüse 102 bis zur Mitte des Greiferkissens.156 verfahren wurde. Das Greiferelement 106 weist das Greiferkissen 156 auf, welches radial außen ein Stützelement 158 teilweise umspannt. Das Stützelement 158 weist einen kranzartigen Überstand 160 auf, in dem auch der Anschluss 154 für einen Pneumatikschlauch (nicht dargestellt) angeordnet ist. Der Überstand 160 ist auf einem Drehlager 162 aufgesetzt, dass über ein Kugel- oder Gleitlager in einem korrelierenden Festlager 164 gelagert und geführt ist. Das Festlager 164 ist an einer Trägerplatte 210 angebracht, die als eine gestrichelte Linie skizziert wurde.

Oberhalb des Überstandes 160 und mit diesem drehfest verbunden, ist eine Zahnriemenscheibe 166 angeordnet, die über das Übertragungselement 118 um eine vertikale Achse in definierten Winkelschritten rotiert werden kann.

Das Greiferelement 106 ist drehend gelagert und einseitig mittels eines (Pneumatik-)Anschlusses 154 mit einem nicht dargestellten Pneumatikschlauch verbunden. Die Summe der einzelnen Drehbewegungen oder Drehschritte (Takte) beträgt idealerweise 180°. Um ein Abreißen des Pneumatikschlauches zu verhindern, wechseln die Drehrichtung nach jeder vollständigen Schälung einer Gemüsestange. Durch den Antrieb über riemenartige Übertragungselement 118, wird das Greiferelement 116 bei jedem Schnitt bspw. um 30° getaktet weitergestellt, so dass bei sechs Doppelschnitten eine Drehung um 180° erfolgt und das Gemüse insgesamt um 360° in einem Zwölfeck geschnitten wird. Bei sehr dickem Gemüse, wie sehr dickem Spargel, wird beispielsweise 8 x 22,5° getaktet, so dass 16 Schälschnitte erforderlich sind. Bei sehr dünnem Gemüse, wie sehr dünnem Spargel, wird 5 x 36° getaktet, so dass 10 Schälschnitte nötig sind.

In dieser Abbildung ist der große Vorteil einer leichten Reinigungsmöglichkeit gut erkennbar. Das Greiferkissen 156 kann nach unten abgeschwemmt werden, weil nur glatte Oberflächen mit dem Gemüse 102 in Kontakt stehen und keinerlei Verschlingungsmöglichkeit für faseriges Material oder Schalen geben ist. Weiterhin kommt das Greiferelement 106 nicht in Kontakt mit Schalen, die bei dem Schälvorgang erzeugt werden, weil diese nach unten fallen und dort entfernt werden können.

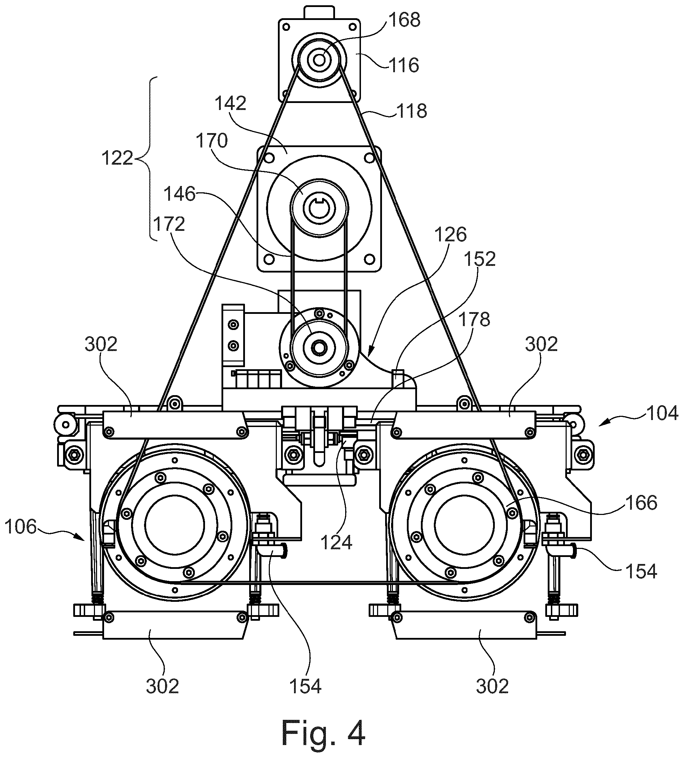

In der Figur 4 sind in einer Draufsicht die Antriebe und Übertragungselemente 118, 146 dargestellt. Die Greifereinheit 104 mit den beiden Greiferelementen 106 wird über den Motor 116 angetrieben, der über einen Zahnriemenkranz 168 und das Übertragungselement 118 mit den beiden Zahnriemenscheiben 166 kraftleitend verbunden ist und diese antreibt. Der Zahnriemenkranz 168 ist unmittelbar auf der Motorwelle des Motors 116 angeordnet, wobei auch ein Zwischengetriebe vorgesehen sein könnte.

Die Schäleinheit 108 (nicht dargestellt) wird über den Motor 142 angetrieben, der über einen Zahnriemenkranz 170 und das Übertragungselement 146 den Zahnriemenkranz 172 der Antriebsspindel 130 rotativ antreibt und damit das Kopplungselement 126 vertikal verfährt, mit dem die gesamte Schäleinheit 108 verbunden ist.

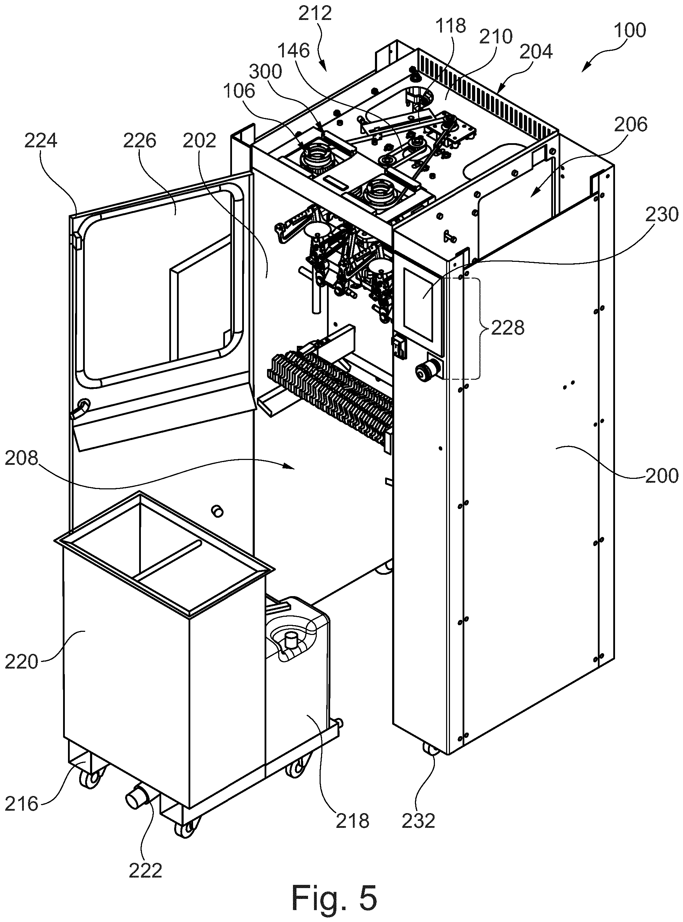

In der Figur 5 ist die Schälvorrichtung 100 mit dem geöffneten Gehäuse 200 dargestellt. Dabei umfasst die Schälvorrichtung 100 eine Zuführungsseite 212, einen Schälraum 202, in dem insbesondere die Schäleinheit 108 angeordnet ist, einen Antriebsraum 206 und einen Wartungsraum 208. An der Vorderseite des Gehäuses 200 ist eine Gehäusetür 224 angeordnet, die eine Sichtfenster 226 aufweist, worüber der Schälraum 202 und der Wartungsraum 208 mindestens teilweise einsehbar und vollständig zugänglich sind. Das Gehäuse 200 weist auf der Unterseite Rollen 232 auf, so dass die Schälvorrichtung 100 insgesamt verschiebbar ist.

Auf der Vorderseite des Gehäuses 200 ist weiterhin eine Bedieneinheit 228 mit einem Monitor 230 angeordnet. In bekannter Weise können weitere Kontroll-, Sicherheits- und Funktionselemente vorgesehen werden, um insbesondere Service-Mitarbeitern erweiterten Eingriffsberechtigungen für die vorrangig vollautomatisch arbeitende Schälvorrichtung einzuräumen.

Die Greifereinheiten 106 bilden die Öffnung und den Zugang zu dem Schälraum 202, indem ein Gemüse 102 durch die Greifereinheiten 106 hindurch in den Schälraum 202 und zu der dortigen Schäleinheit 108 eingeführt werden muss.

Unterhalb der Schäleinheit 108 im Schälraum 202, im Wartungsraum 208 oder auf dem Übergang der beiden Räume ist eine motorisch angetriebene Zerkleinerungseinheit 214 angeordnet, die herabfallenden Schalen des Gemüses 102 schreddert. Der Wartungsraum 208 kann einen Rollwagen 216 aufnehmen, auf dem mindestens ein Tank 218 für beispielsweise Frischwasser angeordnet ist und ein Auffangbehälter 220. Weiterhin weist der Rollwagen 216 einen Schlauchanschluss 222 auf, über den der Tank 218 befüllbar ist.

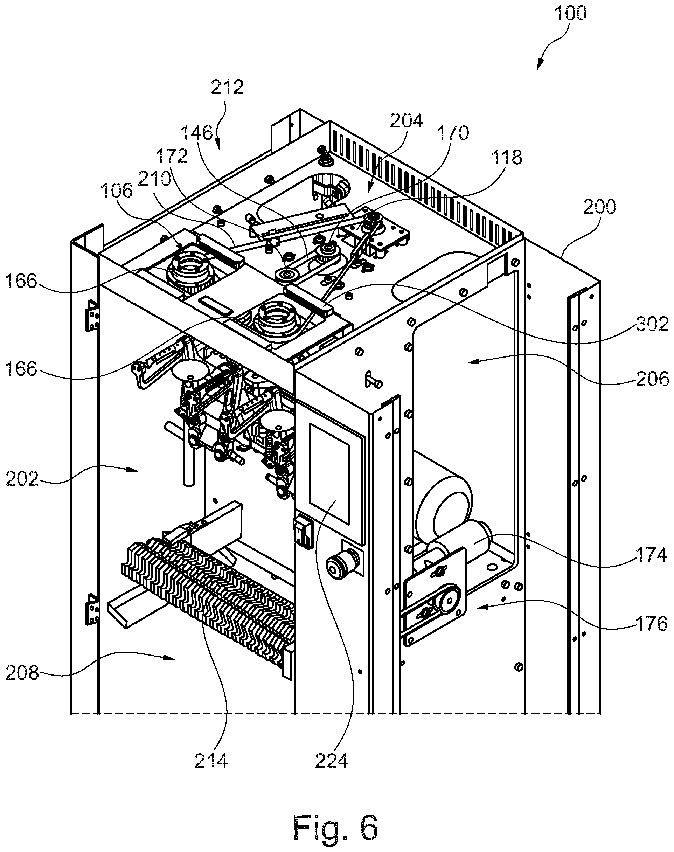

In dem gezeigten Ausführungsbeispiel sind, wie auch in der Figur 6 im Detail gezeigt, alle Motoren 116, 142 außerhalb des Schälraumes 202 und des Wartungsraumes 208 angeordnet. Weiterhin sind alle Motoren 116, 142 und Übertragungselemente 118, 146 seitlich oder oberhalb vom Schälraum 202, so dass es vollständig oder weitgehend vermieden werden kann, dass Feuchtigkeit oder Schutz eindringen.

Oberhalb des Schälraumes 202 und des Antriebsraumes 206 ist ein Transmissionsraum 204 angeordnet, wobei eine Trägerplatte 210 den Transmissionsraum 204 von dem darunter liegenden Räumen trennt. In den Figuren 5 und 6 ist der Transmissionsraum 204 ohne obere Abdeckung gezeigt, die im bestimmungsgemäßen Betrieb regelmäßig angebracht wird. In dem Transmissionsraum 204 sind die kraftübertragenden Bauteile für die Greifereinheit 104 und die Schäleinheit 108 angeordnet. Dies sind die Zahnriemenkränze 168, 170, 172 und die beiden Zahnriemenscheiben 166 und die als Zahnriemen ausgebildeten Übertragungselemente 118, 146.

Die nicht gezeigte Abdeckung weist Öffnungen oberhalb der Greiferelemente 106 bzw. der Greifkissen 156 auf, wobei die Geometriesensoren 302 hierbei überdeckt und geschützt werden. Weiterhin können geeignete konische oder trichterartige Einführhilfen für die Zuführung von Gemüse 102 vorgesehen sein. Diese können beispielsweise ein Stück in Richtung des Greiferelementes 106 bzw. der Greifkissen 156 ragen.

In dem gezeigten Bespiel sind die Geometriesensoren 302 farbsensitiv, also kombinierte Farb- und Geometriesensoren 302, 304, so dass kein weiterer Farbsensor vorgesehen ist.

Die rotierenden Walzen der Zerkleinerungseinheit 214 werden über einen Motor 174 angetrieben, der ebenfalls im dem Antriebsraum 206 untergebracht ist, und dessen Drehbewegung über eine seitliche Transmissionseinheit 176 übertragen wird.

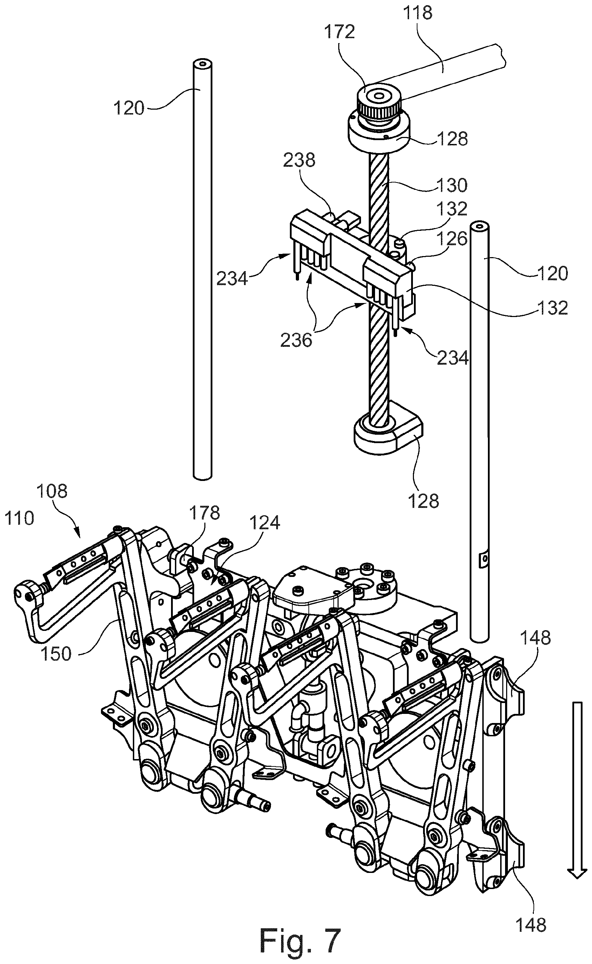

Schließlich zeigt die Figur 7 eine Ausbausituation der Schäleinheit 108. Ohne tragendes Rahmen- oder Halteelemente ist die Antriebsspindel 130 dargestellt, die an zwei Lagern 128 rotierbar gelagert ist. Am oberen Ende der Antriebsspindel 130 ist ein Zahnriemenkranz 172 angeordnet, der in der vorstehend beschriebenen Weise mit dem Übertragungselement 118 kraftleitend verbunden ist. An der Antriebsspindel 130 ist über die Spindelmutter 132 das Koppelelement 126 angeordnet und vertikal antreibbar. In der zeigten Ausbausituation ist die Schäleinheit 108 durch das Ziehen des Rastbolzens 124 und ein Verschieben nach unten von dem Koppelelement 126 und den dortigen vertikalen nach unten weisenden Führungsbolzen 234 und dem Steckverbinder 236 gelöst. Die Rastbolzen 124 sind dabei horizontal ausgerichtet bzw. quer zur Spindelmutter 132. Beim Zusammenbau von Schäleinheit 108 und Kopplungselement 126 dienen die seitlich von dem Steckverbinder 236 angeordneten und vertikal bzw. quer zu den Rastbolzen 124 ausgerichteten Führungsbolzen 234 als Einführungshilfe.

Weiterhin ist die Schäleinheit 108 an den Linearführungen 120 nach unten herausgeführt, so dass die seitlichen Gleitelemente 148 aus Kontakt mit den beiden Linearführungen 120 gekommen sind.

In dem Ausführungsbeispiel kann weiterhin vorgesehen sein, dass die nicht abgebildeten, fluidischen Versorgungstangs für Wasser und Druckluft ebenfalls durch das Lösen des Koppelelements 126 mittels der in die jeweiligen Bauteile eingelassenen Rastbolzen 124 getrennt werden. Hierbei kann für Wasser und Druckluft auch nur ein einzelner Versorgungstank vorgesehen sein.

In der dargestellten Ausbausituation ist zu erkennen, dass der Steckverbinder 236 in Form einer Schnellkupplung ausgebildet ist, der eine schnelle, werkzeuglose Verbindung und Entfernung der erforderlichen Schlauchanschlüsse 222 bzw. Medienanschlüsse, wie Wasser- und/oder Pneumatik, ermöglicht. Auf diese Weise wird eine sehr kompakte und manuell einfach zu bedienende Baueinheit erreicht. Auf der Rückseite der Schäleinheit 108 ist der komplementäre Gegensteckverbinder angeordnet (nicht dargestellt). An dem Kopplungselement 126 sind weiterhin Schlauchanschlüsse 238 vorgesehen, über die der Steckverbinder 236 von außen mit Medien versorgt wird. In der gezeigten Ausführungsform weist der Steckverbinder 236 zwei Gruppen von je vier Medienanschlüssen auf.

Bei einer nicht gezeigten Ausführungsform sind die Steckverbinder separate Schlauch- oder Schnellkupplungen, die nicht in das Kopplungselement 126 integriert sind.

Die Schäleinheit 108 kann somit sehr einfach aus dem Schälraum 202 entnommen werden und bedarfsweise gereinigt werden, beispielsweise als gesamte Schäleinheit 108 in einer handelsüblichen Spülmaschine gereinigt werden. Durch diese einfach, schnell und insbesondere vollständige Entnahmemöglichkeit des Schälwerkes, ist der Schälraum 202 vollständig zugänglich und kann leicht gereinigt werden. Weiterhin kann der Schälraum 202 gefahrlos gereinigt werden, weil die sehr scharfen Messer 110 mit der Schäleinheit 108 gemeinsam entfernt wurden und dies ohne gesonderte (De-)Montage derselben.

Da die Schäleinheit 108 die Baueinheit mit dem größten Verschleiß und Verschmutzung darstellt, erleichtert die schnelle und vollständige Entnahme weiterhin die Wartung und Reparatur. Beispielsweise kann ein Servicetechniker bei einem Betreiber eine defekte und/oder stumpfe Schäleinheit 108 vollständig entnehmen und gegen ein neue, gewartete und/oder getestete Schäleinheit 108 austauschen und somit Unterbrechungszeiten minimieren.

In den vorstehenden Ausführungen werde "Gemüse", "Gemüsestange" und "Stangengemüse" synonym verwendet. Weiterhin ist das Messer 110 aus Gründen der Übersichtlichkeit in einigen Figuren nicht oder nur in einer von mehreren Positionen dargestellt, wobei die Vorrichtung natürlich im bestimmungsgemäßen Betrieb immer mit allen Messern ausgestattet ist. Weiterhin sind viele erforderliche und/oder vorteilhafte Elemente und Details nicht beschreiben oder gezeigt, wie beispielsweise Versorgungsleitungen (Medien, Strom oder Daten), Aufhängungen, Befestigungsmittel und vielen mehr, die bedarfsweise vorzusehen sind.

Vorliegend sollen weiterhin alle Aspekte und Vorteile der Verfahren identisch oder in analoger Weise auch für eine Schälvorrichtung gelten und umgekehrt.

### Bezugszeichenliste

100 Schälvorrichtung
102 Gemüse
104 Greifereinheit
106 Greiferelement
108 Schäleinheit
110 Messer
114 Stützelement
116 Motor für 106
118 Übertragungselement
120 Linearführung
122 Antriebseinheit
124 Rastbolzen
126 Kopplungselement
128 Lager
130 Antriebsspindel
132 Spindelmutter
142 Motor
144 Lagereinheit
146 Übertragungselement
148 Gleitkörper
150 Schwenkarm
152 Anschluss
154 Anschluss
156 Greiferkissen
158 Stützelement
160 Überstand
162 Drehlager
164 Festlager
166 Zahnriemenscheibe
168 Zahnriemenkranz
170 Zahnriemenkranz
172 Zahnriemenkranz
174 Motor
176 Transmissionseinheit
178 Schwenkachse
200 Gehäuse
202 Schälraum
204 Transmissionsraum
206 Antriebsraum
208 Wartungsraum
210 Trennelement
212 Zuführungsseite
214 Zerkleinerungseinheit
216 Rollwagen
218 Tank
220 Auffangbehälter
222 Schlauchanschluss
224 Gehäusetür
226 Sichtfenster
228 Bedienereinheit
230 Monitor
232 Rollen
234 Zapfen
236 Steckverbinder
238 Schlauchanschluss
250 Schällänge
252 Anfangsposition
254 Endposition
256 Teillänge der Schällänge
258 Haltebereich
260 Schälschnitt/e
262 Kopfende
264 Fußende
300 Sensoreinheit
302 Geometriesensor
304 Farbsensor
500 Steuereinheit
A Längsachse
AA Behandlungsachse

## Patentansprüche

1. Schälvorrichtung (100) zum Schälen von stangenförmigen Gemüse (102), insbesondere von grünem und weißen Spargel, mit einer Längsachse (A), wobei die Schälvorrichtung (100) folgendes umfasst:
- eine Behandlungsachse (AA),
- eine Greifereinheit (104) mit mindestens einem Greiferelement (106) zum angetriebenen Halten eines Gemüses (102),
- eine entlang der Behandlungsachse (AA) mittels eines Antriebs (122) motorisch verfahrbare Schäleinheit (108),
- eine Steuereinheit (500) zum Steuern und Regeln der Schälvorrichtung (100),
wobei
die Greifereinheit (104) ausgebildet ist, das Gemüse (102) ortsfest zu halten, und wobei das mindestens eine Greiferelement (106) derart gelagert und motorisch antreibbar ist, dass das Gemüse (102) um die Längsachse (A) rotierbar ist, wobei die Schäleinheit (108) mindestens ein in Richtung der Behandlungsachse (AA) schwenkbar gelagertes Messer (110) aufweist, wobei
im bestimmungsgemäßen Betrieb der Schälvorrichtung (100) die Behandlungsachse (AA) und die Längsachse (A) eines Gemüses (102) deckungsgleich oder weitgehend deckungsgleich ausgerichtet sind,
**dadurch gekennzeichnet, dass**
eine Sensoreinheit (300) zum Erfassen von Messwerten umfasst ist, welche mindestens Folgendes aufweist:
- mindestens einen Geometriesensor (302) und/oder
- mindestens einen Farbsensor (304), und wobei die Steuereinheit (500) ausgebildet ist, auf Basis des mindestens einen Messwertes mindestens einen Schälparameter anzupassen.

2. Vorrichtung nach Anspruch 1, **dadurch gekennzeichnet, dass** der Schälparameter mindestens einer der folgenden Parameter ist:
- Anzahl der Schälschnitte (260) in Umfangsrichtung, insbesondere der parallelen Schälschnitte,
- Schällänge (250) mindestens eines Schälschnittes entlang der Behandlungsachse (AA) und/oder Längsachse (A),
- Anfangsposition (252) und/oder Endposition (254) mindestens eines Schälschnittes,
- Anpresskraft des mindestens einen schwenkbar gelagerten Messers (110) auf mindestens einer Teillänge (256) der Schällänge,
- Haltebereich (258) des Greiferelementes (106) entlang der Längsachse (A) des Gemüses (102) beim Halten,
- Haltekraft des Greiferelementes (106) mindestens für eine Teildauer des Haltens des Gemüses (102).

3. Vorrichtung nach Anspruch 1 oder 2, **dadurch gekennzeichnet, dass** ein in Richtung der Behandlungsachse (AA) verfahrbares Stützelement (114) vorgesehen ist, welches quer zur Behandlungsachse (AA) ausgerichtet ist und/oder ausgerichtet werden kann, insbesondere ein verfahrbares Stützelement (114), welches schwenkbar gelagert ist.

4. Vorrichtung nach einem der vorherigen Ansprüche, **dadurch gekennzeichnet, dass** das mindestens ein Greiferelement (106) ein fluidisch öffnender und schließender Greifer ist, welcher insbesondere eine Ring- oder Kranzform aufweist, wobei das Gemüse (102) beim Ein- oder Ausführen in das Greiferelement (106) in Richtung der Längsachse (A) hindurchgeführt werden kann, insbesondere vollständig hindurchgeführt werden kann.

5. Vorrichtung nach einem der vorherigen Ansprüche, **dadurch gekennzeichnet, dass** die Greifereinheit (104) zwei oder mehr Greiferelemente (106) aufweist, wobei ein Motor (116) vorgesehen ist, mittels welchem über mindestens ein Übertragungselement (118) und/oder eine Getriebeeinheit die zwei oder mehr Greiferelemente (106) rotativ antreibbar sind, insbesondere schritt- oder winkelabhängig antreibbar sind.

6. Vorrichtung nach einem der vorherigen Ansprüche, **dadurch gekennzeichnet, dass** die Schäleinheit (108)
- an einer Linearführung (120) parallel zur Behandlungsachse (AA) verschieblich gelagert ist und/oder
- über einen Antrieb (122) motorisch parallel zur Behandlungsachse (AA) antreibbar ist.

7. Vorrichtung nach einem der vorherigen Ansprüche, **dadurch gekennzeichnet, dass** die Schäleinheit (108) eine Schnellkupplung aufweist oder hiermit verbunden ist, um diese von dem Antrieb (122) zu lösen und zu entnehmen.

8. Vorrichtung nach einem der vorherigen Ansprüche, **dadurch gekennzeichnet, dass** diese ein Gehäuse (200) mit einer Zuführungsseite (212) umfasst, das folgendes umfasst:
- einen Schälraum (202),
- einen Antriebsraum (206), insbesondere zusätzlich einen Transmissionsraum (204).

9. Vorrichtung nach Anspruch 8, **dadurch gekennzeichnet, dass** auf der Zuführungsseite (212) und stromaufwärts zum Schälraum (202) oder zwischen dem Transmissionsraum (204) und dem Schälraum (202), ein Trennelement (210) angeordnet ist, insbesondere ein Trennelement (210), das den Schälraum (202) von der Zuführungsseite (212) oder dem Transmissionsraum (204) quer zur Behandlungsachse (AA) trennt, und wobei das Greiferelement (106) an oder in dem Trennelement (210) angeordnet ist, insbesondere an oder in dem Trennelement (210) rotierbar um die Behandlungsachse (AA) gelagert ist.

10. Vorrichtung nach einem der vorherigen Ansprüche, **dadurch gekennzeichnet, dass** in Schwerkraftrichtung unterhalb der Schäleinheit (108) eine Zerkleinerungseinheit (212) angeordnet ist.

11. Schälvorrichtung (100) zum Schälen von stangenförmigen Gemüse (102), insbesondere von grünem und weißen Spargel, mit einer Längsachse (A), wobei die Schälvorrichtung (100) Folgendes umfasst:
- eine Zuführungsseite (110) für das Gemüse (102),
- eine Greifereinheit (104) mit mindestens einem Greiferelement (106) zum Halten eines Gemüses (102),
- eine entlang der Längsachse (A) motorisch verfahrbare Schäleinheit (108), wobei die Greifereinheit (104) ausgebildet ist, das Gemüse (102) ortsfest zu halten, und wobei das mindestens eine Greiferelement (106) derart gelagert und motorisch antreibbar ist, dass das Gemüse (102) um die Längsachse (A) rotierbar ist,
- eine Steuereinheit (500) zum Steuern und Regeln der Schälvorrichtung (100),
**dadurch gekennzeichnet, dass**
das mindestens ein Greiferelement (106) ein fluidisch öffnender und schließender Greifer ist, welcher insbesondere eine Ring- oder Kranzform aufweist, wobei das Gemüse (102) beim Ein- oder Ausführen in das Greiferelement (106) in Richtung der Längsachse (A) hindurchgeführt werden kann, insbesondere vollständig hindurchgeführt werden kann.

12. Vorrichtung nach Anspruch 11, **dadurch gekennzeichnet, dass** auf der Zuführungsseite (212) eine Sensoreinheit (300) stromaufwärts zum Greiferelement (106) angeordnet ist, wobei ein Gemüse (102)
- beim Zuführen in Richtung der Längsachse (A) auf einer Teillänge an der Sensoreinheit (300) vorbeigeführt und sensorisch erfasst werden kann und/oder
- nach dem Schließen des Greiferelementes (106) auf der Zuführungsseite (110) sensorisch erfassbar ist.

13. Verfahren zum Betrieb einer Schälvorrichtung (100) für stangenförmiges Gemüse (102), insbesondere von grünem und weißen Spargel und/oder aufweisend einen Gemüsekopf und einen Gemüsefuß, mit einer Längsachse (A), wobei folgende Schritte umfasst sind:
- Zuführung des Gemüses (102) in ein Greiferelement (106), wobei das Gemüse (102) in Richtung einer Behandlungsachse (AA) zugeführt wird,
- Halten des Gemüses (102) durch das Greiferelement (106) in einem Haltebereich (258) der Längsachse (A),
- Schälung des Gemüses (102) in mindestens drei Schälschritten (260), in dem mindestens ein Messer (110) an das Gemüse (102) gepresst wird und parallel zur Behandlungsachse (AA) und/oder parallel zur Längsachse (A) verfahren wird, und wobei eine Steuereinheit (500) vorgesehen ist zum Steuern und Regel des Betriebes der Schälvorrichtung (100),
**dadurch gekennzeichnet, dass**
i) bei der Zuführung und/oder
ii) nach der Zuführung und vor der Schälung
ein Sensorschritt zur Erfassung von Messwerten des Gemüses (1002) erfolgt, der mindestens einen Erfassungsschritt umfasst, indem
das Gemüse (102) mindestens in einem Erfassungsschritt hinsichtlich
- des Durchmessers,
- der Länge,
- des Durchmesserverlaufes und/oder
- der Farbe
sensorisch erfasst wird.

14. Verfahren nach Anspruch 13, **dadurch gekennzeichnet, dass** der Betrieb der Schälvorrichtung (100) durch die Steuereinheit (500) auf Basis der Messwerte aus dem Sensorschritt erfolgt, indem mindestens ein Schälparameter in Abhängigkeit von den Messwerten angepasst wird, insbesondere
- eine Anzahl der Schälschnitte (260) in Umfangsrichtung, insbesondere der parallelen Schälschnitte,
- eine Schällänge (250) mindestens eines Schälschnittes entlang der Behandlungsachse (AA) und/oder Längsachse (A),
- eine Anfangsposition (252) und/oder Endposition (254) mindestens eines Schälschnittes,
- eine Anpresskraft des mindestens einen schwenkbar gelagerten Messers (110) auf mindestens einer Teillänge (256) der Schällänge,
- ein Haltebereich (258) des Greiferelementes (106) entlang der Längsachse (A) des Gemüses (102) beim Halten,
- eine Haltekraft des Greiferelementes (106) mindestens für eine Teildauer des Haltens des Gemüses (102).

15. Verfahren nach einem der Ansprüche 13 oder 14, **dadurch gekennzeichnet, dass** in einem Erfassungsschritt das Gemüse (102) hinsichtlich seiner Gesamtlänge in Richtung der Längsachse (A) erfasst wird, wobei das Gemüse (102) an einem Positionssensor vorbeigeführt wird, welcher
- die Strecke vom Fußende bis zum Kopfende erfasst und/oder
- den Eintritt des Fußendes und den Austritt des Kopfendes erfasst, und wobei die Strecke zwischen Fuß- und Kopfende durch einen Wegsensor erfasst wird, insbesondere mittels eines mit einer Halte- und Zentriervorrichtung (140) verbundenen Wegsensors.

16. Verfahren nach einem der Ansprüche 13 bis 15, **dadurch gekennzeichnet, dass** eine Schälvorrichtung nach einem der Ansprüche 1 bis 10 verwendet wird.

17. Verfahren zum Betrieb einer Schälvorrichtung (100) für stangenförmiges Gemüse (102), insbesondere von grünem und weißen Spargel und/oder aufweisend einen Gemüsekopf und einen Gemüsefuß, mit einer Längsachse (A), wobei folgende Schritte umfasst sind:
- Zuführung des Gemüses (102) in ein Greiferelement (106), wobei das Gemüse (102) in Richtung einer Behandlungsachse (AA) zugeführt wird,
- Halten des Gemüses (102) durch das Greiferelement (106) in einem Haltebereich (258) der Längsachse (A),
- Schälung des Gemüses (102) in mindestens drei Schälschritten (260), in dem mindestens ein Messer (110) an das Gemüse (102) gepresst wird und parallel zur Behandlungsachse (AA) und/oder parallel zur Längsachse (A) verfahren wird, und wobei eine Steuereinheit (500) vorgesehen ist zum Steuern und Regeln des Betriebes der Schälvorrichtung (100),
**dadurch gekennzeichnet, dass**
bei der Zuführung das Gemüse (102) mit einem Ende durch das Greiferelement (106) mindestens mit einer Teillänge in Richtung der Längsachse (A) hindurch geführt wird und am gegenüberliegenden Ende mittels des Greiferelementes (106) gehalten wird.

18. Verfahren nach Anspruch 17, **dadurch gekennzeichnet, dass** eine Schälvorrichtung (100) nach einem der Ansprüche 11 oder 12 verwendet wird.
